# NEW EUROPEAN PATENT SPECIFICATION

(11) **EP 0 422 185 B2**
(45) Date of publication and mention of the opposition decision: **06.08.2008**
(45) Mention of the grant of the patent: 14.06.1995
(21) Application number: 90906641.7
(22) Date of filing: 17.04.1990
(51) Int. Cl.: C09K 5/04

(54) **LIQUID COMPOSITIONS CONTAINING CARBOXYLIC ESTERS**
CARBONSÄUREESTER ENTHALTENDE FLÜSSIGE ZUSAMMENSETZUNGEN
COMPOSITIONS LIQUIDES CONTENANT DES ESTERS CARBOXYLIQUES

(30) Priority: 25.04.1989 US 343087
(43) Date of publication of application: 17.04.1991
(73) Proprietor: The Lubrizol Corporation, Wickliffe, Ohio 44092 (US)
(72) Inventor: JOLLEY, Scott, Ted, Mentor, OH 44060 (US)
(74) Representative: Crisp, David Norman
(86) International application number: PCT/US1990/002069
(87) International publication number: WO 1990/012849

(56) References cited:
- EP-A- 0 315 069
- GB-A- 2 216 541
- US-A- 4 758 366
- Japanese Patent Office and File Supplier Japs; & JP-A-56131548 (Nippon Oil &Fats Co. Ltd) 15 October 1981
- Japanese Patent Office and File Supplier Japs; & JP-A-60085478 (TeijinMemoretsukusu K.K.) 14 May 1985
- Japanese Patent Office and File Supplier Japs; & JP-A-61181895 (Nippon Oil &Fats) 14 August 1986

## Description

This invention relates to liquid compositions comprising a major amount of at least one fluorine-containing hydrocarbon, and a minor amount of at least one lubricant. More particularly, the invention relates to liquid compositions useful as refrigeration liquids.

Chlorofluorocarbons, generally referred to in the industry as CFCs, have been widely used as propellants in aerosols, although use in aerosols has been diminishing in recent years because of demands of environmentalists for the reduction if not a complete ban on the use of CFCs because of the detrimental effect of CFCs on the stratosphere's ozone layer. CFCs also have been used because of their unique combination of properties as refrigerants, foam-blowing agents, and specialty solvents within the electronics and aerospace industries. Examples of CFCs which have been utilized for these purposes include CFC-11 which is chlorotrifluoromethane, CFC-12 which is dichlorodifluoromethane, and CFC-113 which is 1,2,2-trifluoro-1,1,2-trichloroethane.

Since 1976, when the aerosol industry began to feel the pressure to reduce if not eliminate the use of CFCs, the aerosol industry has progressively moved toward the substitution of hydrocarbon propellants for CFC propellants. The hydrocarbons, such as butane, are readily available and inexpensive, and the quality of the final product generally has been unaffected by the substitution of propellants. However, the problem of finding a safe replacement of CFC refrigerants and foam-blowing agents has been more difficult to solve. Several replacement candidates have been suggested as alternatives to the fully halogenated hydrocarbons, and these include halogenated hydrocarbons containing at least some hydrogen atoms such as HCFC-22 which is difluorochloromethane, HCFC-123 which is 1,1-dichloro-2,2,2-trifluoroethane, HFC-134a which is 1,1,1,2-tetrafluoroethane and HCFC-141b which is 1,1-dichloro-1-fluoroethane.

The ozone depletion potential of these proposed substitutes is significantly less than the ozone depletion potential of the previously used CFCs. The ozone depletion potential is a relative, measure of the capability of the material to destroy the ozone layer in the atmosphere. It is a combination of the percentage by weight of chlorine (the atom that attacks the ozone molecule) and the lifetime in the atmosphere. HCFC-22 and HFC-134a generally are recommended as being candidates in refrigerant applications, and HFC-134a is particularly attractive because its ozone depletion potential has been reported as being zero.

In order for any of the replacement materials to be useful as refrigerants, the materials must be compatible with the lubricant utilized in the compressor. The presently used refrigerants such as CFC-12 are readily compatible with mineral lubricating oils which are utilized as the lubricant in air-conditioner compressors. The above-described refrigerant candidates, however, have different solubility characteristics than the refrigerants presently in use. For example, mineral lubricating oil is incompatible (i.e., insoluble) with HFC-134a. Such incompatibility results in unacceptable compressor life in compression-type refrigeration equipment including refrigerators and air-conditioners including auto, home and industrial air-conditioners. The problem is particularly evident in automotive air-conditioning systems since the compressors are not separately lubricated, and a mixture of refrigerant and lubricant circulates throughout the entire system.

In order to perform as a satisfactory refrigeration liquid, the mixture of refrigerant and lubricant must be compatible and stable over a wide temperature range such as from about 0°C and above 80°C. It is generally desirable for the lubricants to be soluble in the refrigerant at concentrations of about 5 to 15% over a temperature range of from -40°C to 80°C. These temperatures generally correspond to the working temperatures of an automobile air-conditioning compressor. In addition to thermal stability, the refrigeration liquids must have acceptable viscosity characteristics which are retained even at high temperatures, and the refrigeration liquid should not have a detrimental effect on materials used as seals in the compressors.

Compositions comprising a tetrafluoroethane and polyoxyalkylene glycols are discussed in U.S. Patent 4,755,316. The compositions are useful in refrigeration systems. Refrigeration oils are described in U.S: Patents 4,248,726 and 4,267,064 which comprise mixtures of a polyglycol and 0.1 to 10% of glycidyl ether type epoxy compounds, or epoxidized fatty acid monoesters, and optionally, epoxidized vegetable oil. The lubricating oils are reported to be useful in refrigerators using a halogen-containing refrigerant such as Freons 11, 12, 13, 22, 113, 114, 500 and 502 (available from DuPont), and in particular with Freon 12 or 22.

U.S. Patent 4,431,557 describes fluid compositions comprised of a fluoro- and chloro-containing refrigerant, a hydrocarbon oil, and an alkylene oxide additive compound which improves the thermal resistance of the oil in the presence of the refrigerant. Examples of hydrocarbon oils include mineral oil, alkyl benzene oil, dibasic acid ester oil, polyglycols, etc. The composition may contain other additives including load-carrying additives such as phosphorus acid esters, phosphoric acid esters, etc. Examples of fluorocarbon refrigerants include R-11, R-12, R-113, R-114, R-500, etc.

US-A-4,758,366 describes a refrigeration composition including a polyhalogenated hydrocarbon refrigerant, a refrigeration oil and fluorescent dye compound dissolved within either the refrigerant, the oil or a mixture of the refrigerant and the oil which is useful for visual leak detection. Examples 1 to 3 show compositions in which the refrigerant is dichlorodifluoromethane and the oil is a naphthenic oil solution

JP-A-56-131548 describes neopentyl polyol esters of a neopentyl polyol and a mixed fatty acid of (a) a branched saturated fatty acid having 8-12 carbon atoms and (b) a straight chain fatty acid having 12-18 8 carbon atoms, wherein the mixing ratio of (a) to (b) is 95:5 to 15:85, as Fron^{™} resistant oils. Fron 11^{™} Fron 12^{™} and Fron 113^{™} are given as examples of Fron^{™}. Those refrigerants are the fluorochlorocarbons trichlorofluoromethane, dichlorodifluoromethane and 1,1,2-trichloro-1,2,2-trifluoroethane, respectively.

JP-A-61-181895 describes using an ester of a polyhydric alcohol and a carboxylic acid mixture containing ten percent by weight or more of a hydroxyaryl fatty acid as a Fron^{™} resistant refrigeration oil. This utility is illustrated with Fron 22^{™}, which is chlorodifluoromethane.

U.S. Patent 4,428,854 describes absorption refrigerant compositions for use in refrigeration systems comprising 1 :1,1,2-tetrafluoroethane and an organic solvent capable of dissolving the ethane. Among the solvents disclosed are organic amides, acetonitrile, N-methyl pyrroles, N-methyl pyrrolidine, N-methyl-2-pyrrolidone, nitromethane, various dioxane derivatives, glycol ethers, butyl formate, butyl acetate, diethyl oxalate, diethyl malonate, acetone; methyl ethyl ketone, other ketones and aldehydes, triethyl phosphoric triamide, triethylene phosphate, triethyl phosphate, etc.

Stabilized absorption compositions comprising (a) a halogenated hydrocarbon refrigerant, (b) a liquid absorbent of a polyethylene glycol methyl ether, and (c) at least one stabilizer are described in U.S. Patent 4,454,052. Examples of stabilizers include phosphate esters, epoxy compounds, and organotin compounds. The polyethylene glycol methyl ether-type compounds are of the general formula

CH₃-O-(CH₂H₄O)ₙR

wherein n is an integer of 1 to 6, and R is H, CH₃- or CH₃CO-. A variety of halogenated hydrocarbons are described including 1,1,-difluoromethane, 1,1,1,2-tetrafluoroethane, etc.

U.S. Patent 4,559,154 relates to absorption heat pumps utilizing as working fluid, a saturated fluorohydrocarbon or fluorohydrocarbon ether having from 3 to 5 carbon atoms. Solvents reported to be useful with such fluorohydrocarbons include ethers such as tetraglyme, amides which can be lactams such as the N-alkyl pyrrolidones, sulfonamides and ureas including cyclic ureas.

A liquid composition is described comprising:
(A) a major amount (an amount greater than 50% by weight) of at least one fluorine-containing hydrocarbon containing 1 or 2 carbon atoms, wherein fluorine is the only halogen in the fluorine-containing hydrocarbon; and
(B) a minor amount (an amount less than 50% by weight) of a soluble lubricant which is at least one carboxylic ester of a polyhydroxy compound containing at least 2 hydroxy groups and characterized by the general formula

   R[OC(O)R¹]ₙ (I)

   wherein R is a hydrocarbyl group containing up to 20 carbon atoms, each R¹ is independently hydrogen, a straight chain lower hydrocarbyl group containing up to 7 carbon atoms, a branched chain hydrocarbyl group containing up to 20 carbon atoms, or a straight chain hydrocarbyl group containing from 8 to 22 carbon atoms provided that at least one R¹ group is hydrogen, a lower straight chain hydrocarbyl containing up to 7 carbon atoms or a branched chain hydrocarbyl group containing up to 20 carbon atoms, or a carboxylic acid- or carboxylic acid ester-containing hydrocarbyl group, and n is at least 2, wherein the hydrocarbyl group may contain hetero atoms;
with the provisos that
(a) component (A) is not 1,1,1,2-tetraffuoroethane when component (B) is (i) 25 weight % of the composition of Mobil P51 (the pentaerythritol tetraester of a mixture of alkanoic acids having 7 to 9 carbon atoms) having a viscosity at 38°C of 25x10⁻⁶ m²/s, or (ii) 16 weight % of the composition of Mobil P41 (trimethylol propane triheptanoate) having a viscosity at 38°C of 15x10⁻⁶ m²/s;
(b) component (A) is not 1,1,1,2-tetrafluoroethane when component (B) is: (i) 13 weight % of the composition of a mixture having a viscosity at 38°C of 87x10⁻⁶ m²/s, comprising 70% P-2000 (propylene glycol and propylene oxide to a molecular weight of 2000) and 30% Mobil P51, or (ii) 20 weight % of the composition of a mixture having a viscosity at 38°C of 4x10⁻⁵ m²/s, comprising 30% P-2000 and 70% Mobil P41, and
(c) component (A) is not 1,1,1,2-tetrafluoroethane when component (B) is: (i) 9, 12, 17 or 22 weight % of the composition of a mixture having a viscosity at 38°C of 89x10⁻⁶ m²/s, comprising 90% CP700 (glycerine and propylene oxide to a molecular weight of 700) and 10 % Mobil P51; (ii) 8, 19 or 29 weight % of the composition of a mixture having a viscosity at 38°C of 203x10⁻⁶ m²/s, comprising 75% EDA511 (ethylene diamine and propylene oxide to a molecular weight of 511) and 25% Mobil P41; (iii) 9, 11 or 20 weight % of the composition of a mixture having a viscosity at 38°C of 245x10⁻⁶ m²/s, comprising 75% EDA511 and 25% Mobil P51; or (iv) 18 weight % of the composition of a mixture having a viscosity at 38°C of 78x10⁻⁶ m²/s, comprising 70% CP1406 (glycerine and propylene oxide to a molecular weight of 1406) and 3 0% Mobil P51.

A liquid composition is further described comprising:
(A) from 70 to 99% by weight of 1,1,1,2-tetrafluoroethane; and
(B) from 1 to 30% by weight of a soluble organic lubricant which is at least one carboxylic ester of a polyhydroxy compound containing from 3 to 10 hydroxyl groups and characterized by the general formula

   R[OC(O)R¹]ₙ (I)

   wherein R is a hydrocarbyl group containing up to 20 carbon atoms, each R¹ is independently hydrogen, a straight chain alkyl group containing from 1 to 5 carbon atoms, a branched chain alkyl group containing from 5 to 20 carbons atoms, or a straight chain alkyl group containing from 8 to 12 carbon atoms, provided that at least one R¹ is hydrogen, a straight chain alkyl group containing 1 to 5 carbon atoms or a branched chain alkyl group containing from 5 to 20 carbon atoms, and n is an integer of from 3 to 10, wherein the hydrocarbyl group may contain hetero atoms;
with the provisos that
(a) component (A) is not 1,1,1,2-tetrafluoroethane when component (B) is (i) 25 weight % of the composition of Mobil P51 (the pentaerythritol tetraester of a mixture of alkanoic acids having 7 to 9 carbon atoms) having a viscosity at 38°C of 25x10⁻⁶ m²/s, or (ii) 16 weight % of the composition of Mobil P41 (trimethylol propane triheptanoate) having a viscosity at 38°C of 15x10⁻⁶ m²/s;
(b) component (A) is not 1,1,1,2-tetrafluoroethane when component (B) is: (i) 13 weight % of the composition of a mixture having a viscosity at 38°C of 87x10⁻⁶ m²/s, comprising 70% P-2000 (propylene glycol and propylene oxide to a molecular weight of 2000) and 30% Mobil P51,or (ii) 20 weight % of the composition of a mixture having a viscosity at 38°C of 4x10⁻⁵ m²/s, comprising 30% P-2000 and 70% Mobil P41, and
(c) component (A) is not -1,1,1,2-tetrafluoroethane when component (B) is: (i) 9, 12, 17 or 22 weight % of the composition of a mixture having a viscosity at 38°C of 89x10⁻⁶ m²/s, comprising 90% CP700 (glycerine and propylene oxide to a molecular weight of 700) and 10 % Mobil P51; (ii) 8, 19 or 29 weight % of the composition of a mixture having a viscosity at 38°C of 203x10⁻⁶ m²/s, comprising 75% EDA511 (ethylene diamine and propylene oxide to a molecular weight of 511) and 25% Mobil P41; (iii) 9, 11 or 20 weight % of the composition of a mixture having a viscosity at 38°C of 245x10⁻⁶ m²/s, comprising 75% EDA511 and 25% Mobil P51; or (iv) 18 weight % of the composition of a mixture having a viscosity at 38°C of 78x10⁻⁶ m²/s, comprising 70% CP1406 (glycerine and propylene oxide to a molecular weight of 1406) and 30% Mobil P51.
The liquid compositions are useful particularly as refrigeration liquids in refrigerators and air-conditioners including auto, home and industrial air-conditioners.

Throughout this specification and claims, all parts and percentages are by weight, temperatures are in degrees Celsius, and pressures are at or near atmospheric pressure unless otherwise clearly indicated. As used in this specification and in the appended claims, the terms "hydrocarbyl" and "hydrocarbylene" denote a group having a carbon atom directly attached to the polar group and having a hydrocarbon or predominantly hydrocarbon character within the context of this invention. Such groups include the following:
(1) Hydrocarbon groups; that is, aliphatic, (e.g., alkyl or alkenyl), alicyclic (e.g., cycloalkyl or cycloalkenyl), and the like, as well as cyclic groups wherein the ring is completed through another portion of the molecule (that is, any two indicated substituents may together form an alicyclic group). Such groups are known to those skilled in the art. Examples include methyl, ethyl, octyl, decyl, octadecyl, cyclohexyl, etc.
(2) Substituted hydrocarbon groups; that is, groups containing non-hydrocarbon substituents which, in the context of this invention, do not alter the predominantly hydrocarbon character of the group. Those skilled in the art will be aware of suitable substituents. Examples include halo, hydroxy, alkoxy, etc.
(3) Hetero groups; that is, groups which, while predominantly hydrocarbon in character within the context of this invention, contain atoms other than carbon in a chain or ring otherwise composed of carbon atoms. Suitable hetero atoms will be apparent to those skilled in the art and include, for example, nitrogen, oxygen and sulfur.

In general, no more than three substituents or hetero atoms, and preferably no more than one, will be present for each 10 carbon atoms in the hydrocarbyl group.

Terms such as "alkyl", "alkylene", etc. have meanings analogous to the above with respect to hydrocarbyl and hydrocarbylene.

The term "hydrocarbon-based" also has the same meaning and can be used interchangeably with the term hydrocarbyl when referring to molecular groups having a carbon atom attached directly to the polar group.

The term "lower" as used herein in conjunction with terms such as hydrocarbyl, hydrocarbylene, alkylene, alkyl, alkenyl, alkoxy, and the like, is intended to describe such groups which contain a total of up to 7 carbon atoms.

When a compound or component is indicated herein as being "soluble", the compound or component is soluble in the liquid compositions of the invention comprising the fluorine-containing hydrocarbon and the lubricant. For example, a compound or component is considered "soluble" so long as it is soluble in the liquid compositions, even though it may be insoluble in the fluorine-containing hydrocarbon per se.

### (A) Fluorine-Containing Hydrocarbon.

The liquid compositions of the present invention comprise a major amount of at least one fluorine-containing hydrocarbon. That is, the fluorine-containing hydrocarbons contain at least one C-H bond as well as C-F bonds. Because the liquid compositions of the present invention are primarily intended for use as refrigerants, the fluorine-containing hydrocarbon contains one or two carbon atoms, and more preferably two carbon atoms.

The fluorine-containing hydrocarbons useful in the liquid compositions of the present invention contain only carbon, hydrogen and fluorine. These compounds containing only carbon, hydrogen and fluorine are also referred to herein as fluorohydrocarbons. The hydrocarbons containing chlorine as well as fluorine and hydrogen on the other hand are referred to as chlorofluorohydrocarbons. The fluorine-containing hydrocarbons useful in the composition of the present invention are to be distinguished from the fully halogenated hydrocarbons which have been and are being used as propellants, refrigerants and blowing agents such as CFC-11, CFC-12 and CFC-113 which have been described in the background.

A specific example of the fluorohydrocarbons useful in the liquid compositions of the present invention, and its reported ozone depletion potentials is shown in the following Table I.

**TABLE I**

| Compound Designation | Formula | ODP* |
|---|---|---|
| HFC-134a | CH₂FCF₃ | 0 |

| | | |
|---|---|---|
| * Ozone depletion potential as reported in Process Engineering, pp. 33-34, July, 1988. | | |

Examples of other fluorohydrocarbons which may be useful in the liquid compositions of the present invention include trifluoromethane (HFC-23), 1,1,1-trifluoroethane (HFC-143a), 1,1-difluoroethane (HFC-152a), and 1,1,2,2-tetrafluoroethane (HFC-134). In the refrigerant art, the fluorine-containing hydrocarbons are often identified merely with the prefix "R" in place of the above tetters. For example HFC-23 is R-23, HCFC-124 is R-124, etc.

In general, fluorine-containing hydrocarbons which are useful as refrigerants are fluoromethanes and fluoroethanes boiling at a relatively low temperature at atmospheric pressure, e.g., below 30°C. Mixtures of fluorine-containing hydrocarbons may be used, and the amount of each fluorohydrocarbon in the mixture may be varied as desired. Examples of fluorohydrocarbon mixtures useful as (A) include: 134(a)/23; etc. The useful fluorocarbon refrigerants serve to transfer heat in a refrigeration system by evaporating and absorbing heat at a low temperature and pressure, e.g., at ambient temperature and atmospheric pressure, and by releasing heat on condensing at a higher temperature and pressure.

The liquid compositions of the present invention contain a major amount of the fluorine-containing hydrocarbon. More generally, the liquid compositions will comprise from 50% to 99% by weight of the fluorine-containing hydrocarbon. In another embodiment, the liquid compositions contain from 70% to 99% by weight of the fluorine-containing hydrocarbon.

### (B) Soluble Organic Lubricant

In addition to the fluorine-containing hydrocarbons described above, the liquid compositions of the present invention also contain a minor amount of a soluble lubricant which is at least one carboxylic ester of a polyhydroxy compound containing at least two hydroxy groups and characterized by the general formula

R[OC(O)R¹]ₙ (I)

wherein R is a hydrocarbyl group containing up to 20 carbon atoms, each R¹ is independently hydrogen, a straight chain lower hydrocarbyl group containing up to 7 carbon atoms, a branched chain hydrocarbyl group containing up to 20 carbon atoms, or a straight chain hydrocarbyl group containing from 8 to 22 carbon atoms provided that at least one R¹ group is hydrogen, a lower straight chain hydrocarbyl containing up to 7 carbon atoms or a branched chain hydrocarbyl group containing up to 20 carbon atoms, or a carboxylic acid- or carboxylic ester-containing hydrocarbyl group, and n is at least 2, wherein the hydrocarbyl group may contain hetero atoms.

The carboxylic ester lubricants utilized as component (B) in the liquid compositions of the present invention are reaction products of one or more carboxylic acids (or the lower esters thereof such as methyl, ethyl, etc.) with polyhydroxy compounds containing at least two hydroxy groups. The polyhydroxy compounds may be represented by the general formula

R(OH)ₙ (II)

wherein R is a hydrocarbyl group and n is at least 2. The hydrocarbyl group may contain from 4 to 20 carbon atoms, and the hydrocarbyl group may also contain one or more nitrogen and/or oxygen atoms. The polyhydroxy compounds generally will contain from 2 to 10 hydroxy groups, and more preferably from 3 to 10 hydroxyl groups. The polyhydroxy compound may contain one or more oxyalkylene groups, and, thus, the polyhydroxy compounds include compounds such as polyetherpolyols. The number of carbon atoms and number of hydroxy groups contained in the polyhydroxy compound used to form the carboxylic esters may vary over a wide range, and it is only necessary the carboxylic ester produced with the polyhydroxy compounds be soluble in the fluorine-containing hydrocarbon (A).

The polyhydroxy compounds used in the preparation of the carboxylic esters (I) also may contain one or more nitrogen atoms. For example, the polyhydroxy compound may be an alkanol amine containing from 3 to 6 hydroxy groups. In one preferred embodiment, the polyhydroxy compound is an alkanol amine containing at least two hydroxy groups and more preferably at least three hydroxy groups.

Specific examples of polyhydroxy compounds useful in the present invention include ethylene glycol, diethylene glycol, triethylene glycol, propylene glycol, dipropylene glycol, glycerol, neopentyl glycol, 1,2-, 1,3- and 1,4-butanediols, pentaerythritol, dipentaerythritol, tripentaerythritol, triglycerol, trimethylolpropane, sorbitol, hexaglycerol, 2,2,4-trimethyl-1,3-pentanediol, etc. Mixtures of any of the above polyhydroxy compounds can be utilized.

The carboxylic acids utilized in the preparation of the carboxylic esters useful in the liquid compositions of the present invention may be characterized by the following general formula

R¹COOH (III)

wherein R¹ is (a) H, (b) a straight chain lower hydrocarbyl group containing up to 7 carbon atoms, (c) a branched chain hydrocarbyl group containing up to 20 carbon atoms, or (d) a mixture of one or both of (b) and (c) with a straight chain hydrocarbyl group containing from 8 to 22 carbon atoms or (e) a carboxylic acid- or carboxylic acid ester-containing hydrocarbyl group. Stated otherwise, at least one R¹ group in the ester of Formula I must contain a lower straight chain hydrocarbyl group or a branched chain hydrocarbyl group. The straight chain lower hydrocarbyl group (R¹) contains from 1 to 7 carbon atoms, and in a preferred embodiment, contains from 1 to 5 carbon atoms. The branched chain hydrocarbyl group will generally contain from 4 to 20 carbon atoms. In one preferred embodiment, the branched chain hydrocarbon group contains from 5 to 20 carbon atoms and in a more preferred embodiment, contains from 5 to 14 carbon atoms. The higher molecular weight straight chain hydrocarbyl group containing from 8 to 22 carbon atoms will contain in some embodiments, from 8 to 18 carbon atoms, and in more preferred embodiments from 8 to 14 carbon atoms, and in even more preferred embodiments from 8 to 12 carbon atoms.

In one preferred embodiment, the branched chain hydrocarbyl groups are characterized by the structure

-C(R²)(R³)(R⁴)

wherein R², R³ and R⁴ are each independently alkyl groups, and at least one of the alkyl groups contains two or more carbon atoms. Such branched chain alkyl groups, when attached to a carboxyl group are referred to in the industry as neo groups and the acids are referred to a neo acid. In one embodiment, R² and R³ are methyl groups and R⁴ is an alkyl group containing two or more carbon atoms.

Any of the above hydrocarbyl groups (R¹) may contain one or more carboxy groups or carboxy ester groups such as -COOR⁵ wherein R⁵ is a lower alkyl, hydroxy alkyl or a hydroxy alkyloxy group. Such substituted hydrocarbyl groups are present, for example, when the carboxylic acid R¹COOH (III) is a dicarboxylic acid or a monoester of a dicarboxylic acid. Generally, however, the acid R¹COOH (III) is a monocarboxylic acid since polycarboxylic acids tend to form polymeric products if the reaction conditions and amounts of reactants are not carefully regulated. Mixtures of monocarboxylic acids and minor amounts of dicarboxylic acids or anhydrides are useful in preparing the esters (I).

Examples of carboxylic acids containing a straight chain lower hydrocarbyl group include formic acid, acetic acid, propionic acid, butyric acid, pentanoic acid, hexanoic acid and heptanoic acid. Examples of carboxylic acids wherein the hydrocarbyl group is a branched chain hydrocarbyl group include 2-ethyl-n-butyric acid, 2-hexyldecanoic acid, isostearic acid, 2-methylhexanoic acid, 3,5,5-trimethylhexanoic acid, 2-ethylhexanoic acid, neoheptanoic acid, neodecanoic acid, and commercial mixtures of branched chain carboxylic acids such as the mixture identified as Neo 1214 acid from Exxon.

The third type of carboxylic which can be utilized in the preparation of the carboxylic esters are the acids containing a straight chain hydrocarbyl group containing from 8 to 22 carbon atoms. As noted previously, these higher molecular weight straight chain acids can be utilized only in combination with one of the other acids described above since the higher molecular weight straight chain acids are not soluble in the fluorhydrocarbons. Examples of such higher molecular weight straight chain acids include decanoic acid, dodecanoic acid, stearic acid, lauric acid, behenic acid, etc. Examples of dicarboxylic acids include maleic acid, succinic acid, etc.

In another embodiment, the carboxylic acids utilized to prepare the carboxylic esters may comprise a mixture of a major amount of monocarboxylic acids and a minor amount of dicarboxylic acids. The presence of the dicarboxylic acids results in the formation of esters of higher viscosity. The use of mixtures containing larger amounts of dicarboxylic acids should be avoided since the product ester will contain larger amounts of polymeric esters, and such mixtures may be insoluble in the fluorohydrocarbons. An example of such a mixture is a mixture of 80 parts of neoheptanoic acid and 20 parts of succinic acid.

The carboxylic esters of Formula I are prepared, as mentioned above, by reacting at least one carboxylic acid with at least one polyhydroxy compound containing at least two hydroxy groups. The formation of esters by the interaction of carboxylic acids and alcohols is acid catalyzed and is a reversible process which can be made to proceed to completion by use of a large amount of alcohol or by removal of the water as it is formed in the reaction. If the ester is formed by transesterification of a lower molecular weight carboxylic ester, the reaction can be forced to completion by removal of the low molecular weight alcohol formed as a result of a transesterification reaction. The esterification reaction can be catalyzed by either organic acids or inorganic acids. Examples of inorganic acids include sulfuric acids and acidified clays. A variety of organic acids can be utilized including paratoluene sulfonic acid, acidic resins such as Amberlyst 15, etc. Organometallic catalysts include, for example, tetraisopropoxy orthotitanate.

The amounts of carboxylic acids and polyhydroxy compounds included in the reaction mixture may be varied depending on the results desired. If it is desired to esterify all of the hydroxyl groups containing in the polyhydroxy compounds, sufficient carboxylic acid should be included in the mixture to react with all of the hydroxyl groups. When mixtures of the alcohols are reacted with a polyhydroxy compound in accordance with the present invention, the carboxylic acids can be reacted sequentially with the polyhydroxy compounds or a mixture of carboxylic acids can be prepared and the mixture reacted with the polyhydroxy comopunds. In one preferred embodiment wherein mixtures of acids are utilized, the polyhydroxy compound is first reacted with one carboxylic acid, generally, the higher molecular weight branched chain or straight chain carboxylic acid followed by reaction with the straight chain lower hydrocarbyl carboxylic acid. Throughout the specification and claims, it should be understood that the esters also can be formed by reaction of the polyhydroxy compound with the anhydrides of any of the above-described carboxylic acids. For example, esters are easily prepared by reacting the polyhydroxy compounds either with acetic acid or acetic anhydride.

The formation of esters by the reaction of carboxylic acids or anhydrides with the polyhydroxy compounds described above can be effected by heating the acids or anhydrides, the polyhydroxy compounds, and an acid catalyst to an elevated temperature while removing water or low molecular weight alcohols formed in the reaction. Generally, temperatures of from about 75°C to about 200°C or higher are sufficient for the reaction. The reaction is completed when water or low molecular weight alcohol is no longer formed, and such completion is indicated when water or low molecular weight esters can no longer be removed by distillation.

In some instances, it is desired to prepare carboxylic esters wherein not all of the hydroxyl groups have been esterified. Such partial esters can be prepared by the techniques described above and by utilizing amounts of the acid or acids which are insufficient to esterify all of the hydroxyl groups.

The following examples illustrate the preparation of various carboxylic esters which are useful as lubricants (B) in the liquid compositions of the invention.

### Example 1

A mixture of 92.1 parts (1 mole) of glycerol and 316.2 parts of acetic anhydride is prepared and heated to reflux. The reaction is exothermic and continues to reflux at 130°C for about 4.5 hours. Thereafter the reaction mixture is maintained at the reflux temperature by heating for an additional 6 hours. The reaction mixture is stripped by heating while blowing with nitrogen, and filtered with a filter aid. The filtrate is the desired ester.

### Example 2

A mixture of 872 parts (6.05 moles) of 2-ethyl-hexanoic acid, 184 parts (2 moles) of glycerol and 200 parts of toluene is prepared and blown with nitrogen while heating the mixture to about 60°C. Para-toluene sulfonic acid (5 parts) is added to the mixture which is then heated to the reflux temperature. A water/toluene azeotrope distills at about 120°C. A temperature of 125-130°C is maintained for about 8 hours followed by a temperature of 140°C for 2 hours while removing water. The residue is the desired ester.

### Example 3

Into a reaction vessel there are charged 600 parts (2.5 moles) of triglycerol and 1428 parts (14 moles) of acetic anhydride. The mixture is heated to reflux in a nitrogen atmosphere and maintained at the reflux temperature (125-130°C) for about 9.5 hours. The reaction mixture is nitrogen stripped at 150°C and 15 mm.Hg. The residue is filtered through a filter aid, and the filtrate is the desired ester.

### Example 4

A reaction vessel is charged with 23 parts (0.05 mole) of hexaglycerol and 43.3 parts (0.425 mole) of acetic anhydride. The mixture is heated to the reflux-temperature (about 139°C) and maintained at this temperature for a total of about 8 hours. The reaction mixture is stripped with nitrogen and then vacuum stripped to 150°C at 15 mm.Hg. The residue is filtered through a filter aid, and the filtrate is the desired ester.

### Example 5

A mixture of 364 parts (2 moles) of sorbitol, and 340 parts (2 moles) of a commercial C₈₁₀ straight chain methyl ester (Procter & Gamble), is prepared and heated to 180°C. The mixture is a two-phase system. Para-toluene sulfonic acid (1 part) is added, and the mixture is heated to 150°C whereupon the reaction commences and water and methanol evolve. When the solution becomes homogeneous, 250 parts (2.5 moles) of acetic anhydride are added with stirring. The reaction mixture then is stripped at 150°C and filtered. The filtrate is the desired ester of sorbitol.

### Example 6

A mixture of 536 parts (4 moles) of trimethylol propane and 680 parts (4 moles) of a commercial C₈₁₀ straight chain methyl ester is prepared, and 5 parts of tetraisopropoxy orthotitanate are added. The mixture is heated to 200°C with nitrogen blowing. Methanol is distilled from the reaction mixture. When the distillation of methanol is completed by nitrogen blowing, the reaction temperature is lowered to 150°C, and 408 parts (4 moles) of acetic anhydride are added in a slow stream. A water azeotrope begins to evolve when 50 parts of toluene are added. When about 75 parts of a water/acetic acid mixture has been collected, the distillation ceases. Acetic acid (50 parts) is added and additional water/acetic acid mixture is collected. The acetic acid addition is repeated with heating until no water can be removed by distillation. The residue is filtered and the filtrate is the desired ester.

### Example 7

A mixture of 402 parts (3 moles) of trimethylol propane, 660 parts (3 moles) of a commercial straight chain methyl ester comprising a mixture of about 75% C₁₂ methyl ester and about 25% C₁₄ methyl ester, (CE1270 from Procter & Gamble), and tetraisopropoxy orthotitanate is prepared and heated to 200°C with mild nitrogen blowing. The reaction is allowed to proceed overnight at this temperature, and in 16 hours, 110 parts of methanol is collected. The reaction mixture is cooled to 150°C, and 100 parts of acetic acid and 50 parts of toluene are added followed by the addition of an additional 260 parts of acetic acid. The mixture is heated at about 150°C for several hours yielding the desired ester.

### Example 8

A mixture of 408 parts (3 moles) of pentaerythritol and 660 parts (3 moles) of the CE1270 methyl ester used in Example 7 is prepared with 5 parts of tetraisopropyl orthotitanate, and the mixture is heated to 220°C under a nitrogen purge. No reaction occurs. The mixture then is cooled to 130°C, and 250 parts of acetic acid are added. A small amount of para-toluenesulfonic acid is added and the mixture is stirred at about 200°C for 2 days, and 60 parts of methanol are removed. At this time, 450 parts of acetic anhydride are added and the mixture is stirred at 150°C until the acetic acid/water azeotrope no longer evolves. The residue is filtered through a filter aid, and the filtrate is the desired ester of pentaerythritol.

### Example 9

A mixture of 850 parts (6.25 moles) of pentaerythritol, 3250 parts (25 moles) of neoheptanoic acid, and 10 parts of tetraisopropoxy orthotitanate is prepared and heated to 170°C. Water is evolved and removed by distillation. When the evolution of water ceases, 50 parts of acidified clay are added and some additional water is evolved. A total of about 250 parts of water is removed during the reaction. The reaction mixture is cooled to room temperature and 310 parts of acetic anhydride are added to esterify the remaining hydroxyl groups. The desired ester is obtained.

### Example 10

A mixture of 544 parts (4 moles) of pentaerythritol, 820 parts (4 moles) of Neo 1214 acid, a commercial acid mixture available from Exxon, 408 parts (4 moles) of acetic anhydride and 50 parts of Amberlyst 15 is prepared and heated to about 120°C whereupon water and acetic acid begin to distill. After about 150 parts of water/acetic acid are collected, the reaction temperature increases to about 200°C. The mixture is maintained at this temperature of several days and stripped. Acetic anhydride is added to esterify any remaining hydroxyl groups. The product is filtered and the filtrate is the desired ester.

### Example 11

A mixture of 1088 parts (8 moles) of pentaerythritol, 1360 parts (8 moles) of a commercial, methyl ester of an acid mixture comprising about 55% of C8, 40% of C₁₀ and 4% of C₆ acids ("CE810 Methyl Ester", Procter & Gamble), 816 parts of acetic anhydride and 10 parts of paratoluene sulfonic acid is prepared and heated to reflux. About 500 parts of a volatile material are removed. A water azeotrope mixture then distills resulting in the removal of about 90 parts of water. Acetic anhydride (700 parts) is, added and the mixture is stirred as a water/acetic acid mixture is removed. The reaction is continued until no more water is evolved and no free hydroxy groups remain (by IR). The reaction product is stripped and filtered.

### Example 12

A mixture of 508 parts (2 moles) of dipentaerythritol, 812 parts (8 moles) of acetic anhydride, 10 parts of acidified clay as catalyst and 100 parts of xylene is prepared and heated to 100°C. This temperature is maintained until the solid dipentaerythritol is dissolved. A water/acetic acid azeotrope is collected, and when the rate of evolution diminishes, the reaction mixture is blown with nitrogen. About 100-200 parts of acetic acid are added and the reaction is continued as additional water/acetic acid/xylene azeotrope is collected. When an infrared analysis of the reaction mixture indicates a minimum of free hydroxyl groups, the reaction mixture is stripped and filtered. The filtrate is the desired product which solidifies.

### Example 13

A mixture of 320 parts (1.26 moles) of dipentaerythritol, 975 parts (1.25 moles) of neoheptanoic acid and 25 parts of Amberlyst 15 catalyst is prepared and heated to 130°C. At this temperature water evolution is slow, but when the temperature is raised to 150°C, about 65% of the theory water is collected. The last amounts of water are removed by heating to 200°C. The product is a dark viscous liquid.

### Example 14

A mixture of 372 parts (1 mole) of tripentaerythritol, 910 parts (7 moles) of neoheptanoic acid and 30 parts of Amberlyst 15 catalyst is prepared and heated to 110 ° C as water is removed. The mixture is heated for a total of 48 hours, and unreacted acid is removed by stripping the mixture. The residue is the desired ester.

### Example 15

A mixture of 1032 parts (6 moles) of neodecanoic acid, 450 parts (3 moles) of triethylene glycol and 60 parts of Amberlyst 15 is prepared and heated to 130°C. A water azeotrope is evolved and collected. The residue is the desired product.

### Example 16

A mixture of 1032 parts (6 moles) of neodecanoic acid and 318 parts (3 moles) of diethylene glycol is prepared and heated to 130°C in the presence of 20 parts of Amberlyst 15. After heating for 24 hours and removing about 90 parts of water, 20 parts of Amberlyst 15 are added and the reaction is conducted for another 24 hours. The reaction is stopped when the theory amount of water is obtained, and the residue is the desired ester.

### Example 17

A mixture of 200 parts (2 moles) of succinic anhydride and 62 parts (1 mole) of ethylene glycol is heated to 120°C, and the mixture becomes a liquid. Five parts of acidic clay are added as catalyst, and an exotherm to about 180°C occurs. Isooctanol (260 parts, 2 moles) is added, and the reaction mixture is maintained at 130°C as water is removed. When the reaction mixture becomes cloudy, a small amount of propanol is added and the mixture is stirred at 100°C overnight. The reaction mixture then is filtered to remove traces of oligomers, and the filtrate is the desired ester.

### Example 18

A mixture of 200 parts (2 moles) of succinic anhydride, 62 parts (1 mole) of ethylene glycol and 1 part of paratoluene sulfonic acid is prepared and heated to 80-90 ° C. At this temperature, the reaction begins and an exotherm to 140°C results. The mixture is stirred at 130-140°C for 15 minutes after 160 parts (2 moles) of 2,2,4-trimethylpentanol are added. Water evolves quickly, and when all of the water is removed, the residue is recovered as the desired product.

### Example 19

A mixture of 294 parts (3 moles) of maleic anhydride and 91 parts (1.5 moles) of ethylene glycol is prepared and heated at about 180°C whereupon a strong exotherm occurs and the temperature of the mixture is raised to about 120°C. When the temperature of the mixture cools to about 100°C, 222 parts (3 moles) of n-butyl alcohol and 10 parts of Amberlyst 15 are added. Water begins to evolve and is collected. The reaction mixture is maintained at 120°C until 50 parts of water is collected. The residue is filtered, and the filtrate is the desired product.

### Example 20

A mixture of 1072 parts (8 moles) of trimethylolpropane, 2080 parts (16 moles) of neoheptanoic acid and 50 parts of Amberlyst 15 is prepared and heated to about 130°C. A water/acid azeotrope evolves and is removed. When about 250 parts of the azeotrope has been removed, 584 parts (4 moles) of adipic acid are added and the reaction continues to produce an additional 450 parts of distillate. At this time, 65 parts of trimethylolpropane are added to the mixture and additional water is removed. The residue is filtered and the filtrate is the desired ester.

The organic lubricants characterized by Formula I preferably contain branched alkyl groups and generally are free of acetylenic and aromatic unsaturation. Some compounds of Formulae I which contain such unsaturation may be insoluble in the fluorine-containing hydrocarbons. The soluble lubricants of this invention also are preferably free of olefinic unsaturation except that some olefinic unsaturation may be present so long as the lubricant is soluble.

The carboxylic esters (I) are soluble in the fluorine-containing hydrocarbons and, in particular, in the fluorohydrocarbons such as 1,1,1,2-tetrafluoroethane. The lubricants are soluble over a wide temperature range and, in particular, at low temperatures. The solubility of the lubricants in fluorohydrocarbons such as 1,1,1,2-tetrafluoroethane at low temperatures is determined in the following manner. The lubricant (0.5 gram) is placed in a thick-walled glass vessel equipped with a removable pressure gauge. The tetrafluoroethane (4.5 grams) is condensed into the cooled (-40°C) glass vessel, and the contents are warmed to the desired temperature and mixed to determine if the lubricant is soluble in the tetrafluoroethane. If soluble, the temperature of the mixture is reduced until a separation and/or precipitate is observed. The results of this solubility test conducted with several examples of the carboxylic ester lubricants of the present invention are summarized in the following Table II.

**TABLE II**

| Liquid Containing Product of Example | Solubility °C (ppt.) |
|---|---|
| 6 | -45 |
| 10 | -50 |
| 11 | -40 |
| 12 | -50 |
| 13 | -15 |
| 15 | -30 |
| 16 | 10 |
| 17 | -25 |
| 19 | -10 |

The liquid compositions of the present invention comprise a major amount of a fluorine-containing hydrocarbon and a minor amount of a soluble organic lubricant which is at least one carboxylic ester (I). By "major amount" is meant an amount greater than 50% by weight such as 50.5%, 70%, 99%, etc. The term "minor amount" includes amounts less than 50% by weight such as 1%. 5%. 20%, 30% and up to 49.9%. In one embodiment, the liquid compositions of the present invention will comprise from 70% to 99% of the fluorine-containing hydrocarbon and from 1 to 30% by weight of the lubricant. In other embodiments, the liquid compositions of the present invention may contain from 5% to 20% by weight of the lubricant.

The liquid compositions of the present invention are characterized as having improved thermal and chemical stability over a wide temperature range. Other additives, if soluble in the liquid, known to be useful for improving the properties of halogen-containing hydrocarbon refrigerants can be included in the liquid compositions of the present invention to improve the characteristics of the liquid as a refrigerant. However, hydrocarbon oils such as mineral oil generally are not included in and are most often excluded from the liquid compositions of the invention, particularly when the fluorine-containing hydrocarbon contains no other halogen.

The additives which may be included in the liquid compositions of the present invention to enhance the performance of the liquids include extreme-pressure and anti-wear agents, oxidation and thermal-stability improvers, corrosion-inhibitors, viscosity-index improvers, pour point and/or floc point depressant, detergents, dispersants, anti-foaming agents, viscosity adjusters, etc. As noted above, these supplementary additives must be soluble in the liquid compositions of the invention. Included among the materials which may be used as extreme-pressure and anti-wear agents are phosphates, phosphate esters, phosphites, thiophosphates such as zinc diorganodithiophosphates, chlorinated waxes, sulfurized fats and olefins, organic lead compounds, fatty acids, molybdenum complexes, borates, halogen-substituted phosphorous compounds, sulfurized Diels Alder adducts, organic sulfides, metal salts of organic acids, etc. Sterically hindered phenols, aromatic amines, dithiophosphates, phosphites, sulfides and metal salts of dithioacids are useful examples of oxidation and thermal stability improvers. Compounds useful as corrosion-inhibitors include organic acids, organic amines, organic phosphates, organic alcohols, metal sulfonates, organic phosphites, etc. VI improvers include polyolefins such as polyesterbutene, polymethacrylate, polyalkyl styrenes, etc. Pour point and floc point depressants include polymethacrylates, ethylenevinyl acetate copolymers, succinamic acid-olefin copolymers, ethylene-alpha olefin copolymers, etc. Detergents include sulfonates, long-chain alkyl-substituted aromatic sulfonic acids, phosphonates, phenylates, metal salts of alkyl phenols, alkyl phenol-aldehyde condensation products, metal salts of substituted salicylates, etc. Silicone polymers are a well known type of anti-foam agent. Viscosity adjusters are exemplified by polyisobutylene, polymethacrylates, polyalkyl styrenes, naphthenic oils, alkyl benzene oils, polyesters, polyvinyl chloride, polyphosphates, etc.

The liquid compositions of the present invention are particularly useful as refrigerants in various refrigeration systems which are compression-type systems such as refrigerators, freezers, and air-conditioners including automotive, home and industrial air-conditioners. The following examples are illustrative of the liquid compositions of the present invention.

| Example A | Parts by Wt. |
|---|---|
| 1,1,1,2-tetrafluoroethane (HCFC-134a) | 90 |
| Lubricant of Example 2 | 10 |
| Example B | |
| 1,1,2,2-tetrafluoroethane | 85 |
| Lubricant of Example 4 | 15 |
| Example C | |
| HCFC-134a | 95 |
| Lubricant of Example 6 | 5 |
| Example D | |
| HCFC-134a | 80 |
| Product of Example 1 | 20 |
| Example E | |
| HCFC-134a | 85 |
| Product of Example 4 | 15 |

## Claims

1. A liquid composition comprising:
(A) a major amount (an amount greater than 50% by weight) of at least one fluorine-containing hydrocarbon containing 1 or 2 carbon atoms, wherein fluorine is the only halogen in the fluorine-containing hydrocarbon; and
(B) a minor amount (an amount less than 50% by weight) of a soluble lubricant which is at least one carboxylic ester of a polyhydroxy compound containing at least 2 hydroxy groups and **characterized by** the general formula
R[OC(O)R¹]ₙ (I)
wherein R is a hydrocarbyl group containing up to 20 carbon atoms, each R¹ is independently hydrogen, a straight chain lower hydrocarbyl group containing up to 7 carbon atoms, a branched chain hydrocarbyl group containing up to 20 carbon atoms, or a straight chain hydrocarbyl group containing from 8 to 22 carbon atoms provided that at least one R¹ group is hydrogen, a lower straight chain hydrocarbyl containing up to 7 carbon atoms or a branched chain hydrocarbyl group containing up to 20 carbon atoms, or a carboxylic acid- or carboxylic acid ester-containing hydrocarbyl group, and n is at least 2, wherein the hydrocarbyl group may contain hetero atoms;
with the provisos that
(a) component (A) is not 1,1,1,2-tetrafluoroethane when component (B) is (i) 25 weight % of the composition of Mobil P51 (the pentaerythritol tetraester of a mixture of alkanoic acids having 7 to 9 carbon atoms) having a viscosity at 38°C of 25x10⁻⁶ m²/s, or (ii) 16 weight % of the composition of Mobil P41 (trimethylol propane triheptanoate) having a viscosity at 38°C of 15x10⁻⁶ m²/s;
(b) component (A) is not 1,1,1,2-tetrafluoroethane when component (B) is: (i) 13 weight % of the composition of a mixture having a viscosity at 38°C of 87x 10⁻⁶ m²/s, comprising 70% P-2000 (propylene glycol and propylene oxide to a molecular weight of 2000) and 30% Mobil P51,or (ii) 20 weight % of the composition of a mixture having a viscosity at 38°C of 4x10⁻⁵ m²/s, comprising 30% P-2000 and 70% Mobil P41, and
(c) component (A) is not 1,1,1,2-tetrafluoroethane when component (B) is: (i) 9, 12, 17 or 22 weight % of the composition of a mixture having a viscosity at 38°C of 89x10⁻⁶ m²/s, comprising 90% CP700 (glycerine and propylene oxide to a molecular weight of 700) and 10 % Mobil P51; (ii) 8, 19 or 29 weight % of the composition of a mixture having a viscosity at 38°C of 203x10⁻⁶ m²/s, comprising 75% EDA511 (ethylene diamine and propylene oxide to a molecular weight of 511) and 25% Mobil P41; (iii) 9, 11 or 20 weight % of the composition of a mixture having a viscosity at 38°C of 245x10⁻⁶ m²/s, comprising 75% EDA511 and 25% Mobil P51; or (iv) 18 weight % of the composition of a mixture having a viscosity at 38°C of 78x10⁻⁶ m²/s, comprising 70% CP1406 (glycerine and propylene oxide to a molecular weight of 1406) and 30% Mobil P51.

2. The liquid composition of claim 1 wherein the fluorine-containing hydrocarbon (A) is 1,1,1,2-tetrafluoroethane.

3. The liquid composition of claim 1 or 2 comprising from 70% to 99% by weight of the fluorine-containing hydrocarbon (A) and from 1 to 30% by weight of the soluble organic lubricant (B).

4. The liquid composition of claim 1 or 2 wherein R¹ in Formula I is a branched chain hydrocarbyl group containing from 4 to 20 carbons.

5. The liquid composition of claim 1 or 2 wherein n in Formula I is an integer from 2 to 10.

6. The liquid composition of claim 5 wherein (B) is derived from a polyhydroxy compound containing oxyalkylene groups.

7. The liquid composition of claim 5 wherein (B) is derived from a polyhydroxy compound which is an alkanol amine containing at least 2 hydroxy groups.

8. The liquid composition of either claim 1 or claim 2 which is free of alkylene oxide compounds.

9. The liquid composition of claim 5 wherein n is an integer of from 3 to 10.

10. The liquid composition of claim 1 or 2 wherein R is a hydrocarbyl group containing at least one nitrogen or oxygen atom.

11. The liquid composition of claim 1 or 2 wherein (B) is a carboxylic ester of pentaerythritol, dipentaerythritol or tripentaerythritol.

12. The liquid composition of claim 7 wherein (B) is a carboxylic ester of an alkanol amine containing at least 3 hydroxy groups.

13. A liquid composition comprising:
(A) from 70 to 99% by weight of 1,1,1,2-tetrafluoroethane; and
(B) from 1 to 30% by weight of a soluble organic lubricant which is at least one carboxylic ester of a polyhydroxy compound containing from 3 to 10 hydroxyl groups and **characterized by** the general formula
R[OC(O)R¹]ₙ (I)
wherein R is a hydrocarbyl group containing up to 20 carbon atoms, each R¹ is independently hydrogen, a straight chain alkyl group containing from 1 to 5 carbon atoms, a branched chain alkyl group containing from 5 to 20 carbon atoms, or a straight chain alkyl group containing from 8 to 12 carbon atoms, provided that at least one R¹ is hydrogen, a straight chain alkyl group containing 1 to 5 carbon atoms or a branched chain alkyl group containing from 5 to 20 carbon atoms, and n is an integer of from 3 to 10, wherein the hydrocarbyl group may contain hetero atoms;
with the provisos that
(a) component (A) is not 1,1,1,2-tetrafluoroethane when component (B) is (i) 25 weight % of the composition of Mobil P51 (the pentaerythritol tetraester of a mixture of alkanoic acids having 7 to 9 carbon atoms) having a viscosity at 38°C of 25x10⁻⁶ m²/s, or (ii) 16 weight % of the composition of Mobil P41 (trimethylol propane triheptanoate) having a viscosity at 38°C of 15x10⁻⁶ m²/s;
(b) component (A) is not 1,1,1,2-tetrafluoroethane when component (B) is: (i) 13 weight % of the composition of a mixture having a viscosity at 38°C of 87x10⁻⁶ m²/s, comprising 70% P-2000 (propylene glycol and propylene oxide to a molecular weight of 2000) and 30% Mobil P51,or (ii) 20 weight % of the composition of a mixture having a viscosity at 38°C of 4x10⁻⁵ m²/s, comprising 30% P-2000 and 70% Mobil P41, and
(c) component (A) is not 1,1,1,2-tetrafluoroethane when component (B) is: (i) 9, 12, 17 or 22 weight % of the composition of a mixture having a viscosity at 38°C of 89x10⁻⁶ m²/s, comprising 90% CP700 (glycerine and propylene oxide to a molecular weight of 700) and 10 % Mobil P51; (ii) 8, 19 or 29 weight % of the composition of a mixture having a viscosity at 38°C of 203x10⁻⁶ m²/s, comprising 75% EDA511 (ethylene diamine and propylene oxide to a molecular weight of 511) and 25% Mobil P41; (iii) 9, 11 or 20 weight % of the composition of a mixture having a viscosity at 38°C of 245x10⁻⁶ m²/s, comprising 75% EDA511 and 25% Mobil P51; or (iv) 18 weight % of the composition of a mixture having a viscosity at 38°C of 78x10⁻⁶ m²/s, comprising 70% CP1406 (glycerine and propylene oxide to a molecular weight of 1406) and 30% Mobil P51.

14. The liquid composition of claim 13 wherein each R¹ is independently a methyl or ethyl group.

15. The liquid composition of claim 13 wherein each R¹ is a branched chain alkyl group containing from 5 to 14 carbon atoms.

16. The liquid composition of claim 13 wherein at least one of the R¹ groups is hydrogen or a methyl or ethyl group and the remaining R¹ groups are branched chain alkyl groups containing from 5 to 20 carbon atoms.

17. The liquid composition of claim 13 wherein the branched chain alkyl groups have the structure
-C(R²)(R³)(R⁴)
wherein R², R³ and R⁴ are each independently alkyl groups and at least one of the alkyl groups contains 2 or more carbon atoms.

18. The liquid composition of claim 17 wherein R² and R³ are methyl groups.

19. The liquid composition of claim 13 wherein the polyhydroxy compound is an alkanol amine containing from 3 to 6 hydroxy groups.

20. The liquid composition of claim 13 wherein the polyhydroxy compound is mono- or dipentaerythritol.

21. The liquid composition of claim 13 which is free of alkylene oxide compounds.

22. The liquid composition of claim 1 or 2, wherein said carboxylic acid is a monocarboxylic acid.

23. The liquid composition of claim 5, wherein said polyhydroxy compound comprises neopentyl glycol, pentaerythritol, dipentaerythritol, tripentaerythritol, trimethylolpropane, and mixtures thereof.

24. The liquid composition of claim 5, wherein said carboxylic acid comprises:
a) a straight chain lower hydrocarbyl group-containing acid or anhydride, wherein said straight chain lower hydrocarbyl group contains from 1 to 7 carbon atoms;
b) a branched chain hydrocarbyl group-containing acid or anhydride, wherein said branched chain hydrocarbyl group contains from 4 to 20 carbon atoms; or
c) a mixture of one or both of
i) a straight chain lower hydrocarbyl group-containing acid or anhydride, wherein said straight chain lower hydrocarbyl group contains from 1 to 7 carbon atoms, and
ii) a branched chain hydrocarbyl group-containing acid or anhydride, wherein said branched chain hydrocarbyl group contains from 4 to 20 carbon atoms
with a straight chain hydrocarbyl group-containing acid or anhydride wherein said straight chain hydrocarbyl group contains from 8 to 22 carbon atoms.

25. The liquid composition of claim 24, wherein said straight chain lower hydrocarbyl group contains from 1 to 5 carbon atoms.

26. The liquid composition of claim 24, wherein said straight chain lower hydrocarbyl group-containing acid comprises pentanoic acid, hexanoic acid or heptanoic acid.

27. The liquid composition of claim 24, wherein said branched chain hydrocarbyl group contains from 5 to 20 carbon atoms.

28. The liquid composition of claim 27, wherein said branched chain hydrocarbyl group contains from 5 to 14 carbon atoms.

29. The liquid composition of claim 27, wherein said branched chain hydrocarbyl group-containing acid comprises 2-methylhexanoic acid, 3,5,5-trimethylhexanoic acid, 2-ethylhexanoic acid, neoheptanoic acid, or neodecanoic acid.

30. The liquid composition of claim 24, wherein said straight chain hydrocarbyl group contains from 8 to 18 carbon atoms.

31. The liquid composition of claim 30, wherein said straight chain hydrocarbyl group contains from 8 to 14 carbon atoms.

32. The liquid composition of claim 30, wherein said straight chain hydrocarbyl group-containing acid comprises decanoic acid, dodecanoic acid, stearic acid, or lauric acid.

33. The liquid composition of either claim 1 or claim 2, wherein said carboxylic acid is a dicarboxylic acid.

34. The liquid composition of either claim 1 or claim 2, wherein said carboxylic acid comprises a mixture of a major amount of a monocarboxylic acid and minor amount of a dicarboxylic acid.

35. The liquid composition of either claim 33 or claim 34, wherein said dicarboxylic acid is adipic acid.

36. The liquid composition of either claim 1 or claim 2, wherein R¹ contains more than one carboxy group or carboxy ester group.

## Patentansprüche

1. Flüssige Zusammensetzung, umfassend:
(A) eine Hauptmenge (eine größere Menge als 50 Gew.-%) mindestens eines Fluor enthaltenden Kohlenwasserstoffs, der ein oder zwei Kohlenstoffatome enthält, wobei Fluor das einzige Halogenatom in dem Fluor enthaltenden Kohlenwasserstoff ist; und
(B) eine kleinere Menge (eine geringere Menge als 50 Gew.-%) eines löslichen Schmiermittels, das mindestens ein Carbonsäureester einer Polyhydroxyverbindung ist, die mindestens 2 Hydroxylgruppen enthält und durch die allgemeine Formel
R[OC(O)R¹]ₙ (I)
**gekennzeichnet** ist, in der R ein Kohlenwasserstoffrest ist, der bis zu 20 Kohlenstoffatome enthält, jeder der Reste R¹ unabhängig ein Wasserstoffatom, einen linearen niederen Kohlenwasserstoffrest, der bis zu 7 Kohlenstoffatome enthält, einen verzweigten Kohlenwasserstoffrest, der bis zu 20 Kohlenstoffatome enthält, oder einen linearen Kohlenwasserstoffrest, der 8 bis 22 Kohlenstoffatome enthält, darstellt, mit der Maßgabe, dass mindestens einer der Reste R¹ ein Wasserstoffatom, einen linearen niederen Kohlenwasserstoffrest, der bis zu 7 Kohlenstoffatome enthält, oder einen verzweigten Kohlenwasserstoffrest, der bis zu 20 Kohlenstoffatome enthält, oder einen eine Carbonsäure oder einen Carbonsäureester enthaltenden Kohlenwasserstoffrest darstellt, und n mindestens 2 ist, wobei der Kohlenwasserstoffrest Heteroatome enthalten kann;
mit den Maßgaben, dass
(a) Komponente (A) nicht 1,1,1,2-Tetrafluorethan ist, wenn Komponente (B) (i) 25 Gew.-% der Zusammensetzung von Mobil P51 (dem Pentaerythrittetraester eines Gemischs von Alkansäuren mit 7 bis 9 Kohlenstoffatomen) mit einer Viskosität bei 38°C von 25x10⁻⁶ m²/s oder (ii) 16 Gew.-% der Zusammensetzung von Mobil P41 (Trimethylolpropantriheptanoat) mit einer Viskosität bei 38°C von 15x10⁻⁶ m²/s ist;
(b) Komponente (A) nicht 1,1,1,2-Tetrafluorethan ist, wenn Komponente (B) (i) 13 Gew.-% der Zusammensetzung eines Gemischs mit einer Viskosität bei 38°C von 87x10⁻⁶ m²/s, welches 70% P-2000 (Propylenglykol und Propylenoxid bis zu einem Molekulargewicht von 2000) und 30% Mobil P51 umfasst, oder (ii) 20 Gew.-% der Zusammensetzung eines Gemischs mit einer Viskosität bei 38°C von 4x10⁻⁵ m²/s, welches 30% P-2000 und 70% Mobil P41 umfasst, ist und
(c) Komponente (A) nicht 1,1,1,2-Tetrafluorethan ist, wenn Komponente (B) (i) 9, 12, 17 oder 22 Gew.-% der Zusammensetzung eines Gemischs mit einer Viskosität bei 38°C von 89x10⁻⁶ m²/s, welches 90% CP700 (Glycerin und Propylenoxid bis zu einem Molekulargewicht von 700) und 10% Mobil P51 umfasst; (ii) 8, 19 oder 29 Gew.-% der Zusammensetzung eines Gemischs mit einer Viskosität bei 38°C von 203x10⁻⁶ m²/s, welches 75% EDA511 (Ethylendiamin und Propylenoxid bis zu einem Molekulargewicht von 511) und 25% Mobil P41 umfasst; (iii) 9, 11 oder 20 Gew.-% der Zusammensetzung eines Gemischs mit einer Viskosität bei 38°C von 245x10⁻⁶ m²/s, welches 75% EDA511 und 25% Mobil P51 umfasst; oder (iv) 18 Gew.-% der Zusammensetzung eines Gemischs mit einer Viskosität bei 38°C von 78x10⁻⁶ m²/s, welches 70% CP1406 (Glycerin und Propylenoxid bis zu einem Molekulargewicht von 1406) und 30% Mobil P51 umfasst, ist.

2. Flüssige Zusammensetzung nach Anspruch 1, in der der Fluor enthaltende Kohlenwasserstoff (A) 1,1,1,2-Tetrafluorethan ist.

3. Flüssige Zusammensetzung nach Anspruch 1 oder 2, umfassend 70 Gew.-% bis 99 Gew.-% des Fluor enthaltenden Kohlenwasserstoffs (A) und 1 bis 30 Gew.-% des löslichen organischen Schmiermittels (B).

4. Flüssige Zusammensetzung nach Anspruch 1 oder 2, wobei R¹ in der Formel I ein verzweigter Kohlenwasserstoffrest ist, der 4 bis 20 Kohlenstoffatome enthält.

5. Flüssige Zusammensetzung nach Anspruch 1 oder 2, in der n in der Formel I eine ganze Zahl von 2 bis 10 ist.

6. Flüssige Zusammensetzung nach Anspruch 5, in der (B) von einer Polyhydroxyverbindung abgeleitet ist, die Oxyalkylenreste enthält.

7. Flüssige Zusammensetzung nach Anspruch 5, in der (B) von einer Polyhydroxyverbindung abgeleitet ist, die ein Alkanolamin ist, das mindestens 2 Hydroxylgruppen enthält.

8. Flüssige Zusammensetzung nach entweder Anspruch 1 oder Anspruch 2, die frei von Alkylenoxidverbindungen ist.

9. Flüssige Zusammensetzung nach Anspruch 5, in der n eine ganze Zahl von 3 bis 10 ist.

10. Flüssige Zusammensetzung nach Anspruch 1 oder 2, in der R ein Kohlenwasserstoffrest ist, der mindestens ein Stickstoff- oder Sauerstoffatom enthält.

11. Flüssige Zusammensetzung nach Anspruch 1 oder 2, in der (B) ein Carbonsäureester von Pentaerythrit, Dipentaerythrit oder Tripentaerythrit ist.

12. Flüssige Zusammensetzung nach Anspruch 7, in der (B) ein Carbonsäureester eines Alkanolamins ist, das mindestens 3 Hydroxylgruppen enthält.

13. Flüssige Zusammensetzung, umfassend:
(A) 70 bis 99 Gew.-% 1,1,1,2-Tetrafluorethan; und
(B) 1 bis 30 Gew.-% eines löslichen organischen Schmiermittels, das mindestens ein Carbonsäureester einer Polyhydroxyverbindung mit 3 bis 10 Hydroxylgruppen ist, der durch die allgemeine Formel
R[OC(O)R¹]ₙ (I)
**gekennzeichnet** ist, in der R ein Kohlenwasserstoffrest ist, der bis zu 20 Kohlenstoffatome enthält, jeder der Reste R¹ unabhängig ein Wasserstoffatom, einen linearen Alkylrest, der 1 bis 5 Kohlenstoffatome enthält, einen verzweigten Alkylrest, der 5 bis 20 Kohlenstoffatome enthält, oder einen linearen Alkylrest, der 8 bis 12 Kohlenstoffatome enthält, darstellt, mit der Maßgabe, dass mindestens einer der Reste R¹ ein Wasserstoffatom, einen linearen Alkylrest, der 1 bis 5 Kohlenstoffatome enthält, oder einen verzweigten Alkylrest, der 5 bis 20 Kohlenstoffatome enthält, darstellt, und n eine ganze Zahl von 3 bis 10 ist, wobei der Kohlenwasserstoffrest Heteroatome enthalten kann;
mit den Maßgaben, dass
(a) Komponente (A) nicht 1,1,1,2-Tetrafluorethan ist, wenn Komponente (B) (i) 25 Gew.% der Zusammensetzung von Mobil P51 (dem Pentaerythrittetraester eines Gemischs von Alkansäuren mit 7 bis 9 Kohlenstoffatomen) mit einer Viskosität bei 38°C von 25x10⁻⁶ m²/s oder (ii) 16 Gew.-% der Zusammensetzung von Mobil P41 (Trimethylolpropantriheptanoat) mit einer Viskosität bei 38°C von 15x10⁻⁶ m²/s ist;
(b) Komponente (A) nicht 1,1,1,2-Tetrafluorethan ist, wenn Komponente (B) (i) 13 Gew.-% der Zusammensetzung eines Gemischs mit einer Viskosität bei 38°C von 87x10⁻⁶ m²/s, welches 70% P-2000 (Propylenglykol und Propylenoxid bis zu einem Molekulargewicht von 2000) und 30% Mobil P51 umfasst, oder (ii) 20 Gew.-% der Zusammensetzung eines Gemischs mit einer Viskosität bei 38°C von 4x10⁻⁵ m²/s, welches 30% P-2000 und 70% Mobil P41 umfasst, ist und
(c) Komponente (A) nicht 1,1,1,2-Tetrafluorethan ist, wenn Komponente (B) (i) 9, 12, 17 oder 22 Gew.-% der Zusammensetzung eines Gemischs mit einer Viskosität bei 38°C von 89x10⁻⁶ m²/s, welches 90% CP700 (Glycerin und Propylenoxid bis zu einem Molekulargewicht von 700) und 10% Mobil P51 umfasst; (ii) 8, 19 oder 29 Gew.-% der Zusammensetzung eines Gemischs mit einer Viskosität bei 38°C von 203x10⁻⁶ m²/s, welches 75% EDA511 (Ethylendiamin und Propylenoxid bis zu einem Molekulargewicht von 511) und 25% Mobil P41 umfasst; (iii) 9, 11 oder 20 Gew.-% der Zusammensetzung eines Gemischs mit einer Viskosität bei 38°C von 245x10⁻⁶ m²/s, welches 75% EDA511 und 25% Mobil P51 umfasst; oder (iv) 18 Gew.-% der Zusammensetzung eines Gemischs mit einer Viskosität bei 38°C von 78x10⁻⁶ m²/s, welches 70% CP1406 (Glycerin und Propylenoxid bis zu einem Molekulargewicht von 1406) und 30% Mobil P51 umfasst, ist.

14. Flüssige Zusammensetzung nach Anspruch 13, in der jeder der Reste R¹ unabhängig eine Methyl- oder Ethylgruppe ist.

15. Flüssige Zusammensetzung nach Anspruch 13, in der jeder der Reste R¹ ein verzweigter Alkylrest ist, der 5 bis 14 Kohlenstoffatome enthält.

16. Flüssige Zusammensetzung nach Anspruch 13, in der mindestens einer der Reste R¹ ein Wasserstoffatom oder eine Methyl- oder Ethylgruppe ist und die verbleibenden Reste R¹ verzweigte Alkylreste sind, die 5 bis 20 Kohlenstoffatome enthalten.

17. Flüssige Zusammensetzung nach Anspruch 13, in der die verzweigten Alkylreste die Struktur
-C(R²)(R³)(R⁴)
aufweisen, in der R², R³ und R⁴ jeweils unabhängig Alkylreste sind und mindestens einer der Alkylreste 2 oder mehr Kohlenstoffatome enthält.

18. Flüssige Zusammensetzung nach Anspruch 17, in der R² und R³ Methylgruppen sind.

19. Flüssige Zusammensetzung nach Anspruch 13, in der die Polyhydroxyverbindung ein Alkanolamin ist, das 3 bis 6 Hydroxylgruppen enthält.

20. Flüssige Zusammensetzung nach Anspruch 13, in der die Polyhydroxyverbindung Mono- oder Dipentaerythrit ist.

21. Flüssige Zusammensetzung nach Anspruch 13, die frei von Alkylenoxidverbindungen ist.

22. Flüssige Zusammensetzung nach Anspruch 1 oder 2, in der die Carbonsäure eine Monocarbonsäure ist.

23. Flüssige Zusammensetzung nach Anspruch 5, in der die Polyhydroxyverbindung Neopentylglykol, Pentaerythrit, Dipentaerythrit, Tripentaerythrit, Trimethylolpropan und Gemische davon umfasst.

24. Flüssige Zusammensetzung nach Anspruch 5, in der die Carbonsäure umfasst:
a) ein(e) einen linearen niederen Kohlenwasserstoffrest enthaltende(s) Säure oder Anhydrid, in der/dem der lineare niedere Kohlenwasserstoffrest 1 bis 7 Kohlenstoffatome enthält;
b) ein(e) einen verzweigten Kohlenwasserstoffrest enthaltende(s) Säure oder Anhydrid, in der/dem der verzweigte Kohlenwasserstoffrest 4 bis 20 Kohlenstoffatome enthält; oder
c) ein Gemisch von einem oder beiden von
i) einer/einem einen linearen niederen Kohlenwasserstoffrest enthaltenden Säure oder Anhydrid, in der/dem der lineare niedere Kohlenwasserstoffrest 1 bis 7 Kohlenstoffatome enthält, und
ii) einer/einem einen verzweigten Kohlenwasserstoffrest enthaltenden Säure oder Anhydrid, in der/dem der verzweigte Kohlenwasserstoffrest 4 bis 20 Kohlenstoffatome enthält,
mit einer/einem einen linearen Kohlenwasserstoffrest enthaltenden Säure oder Anhydrid, in der/dem der lineare Kohlenwasserstoffrest 8 bis 22 Kohlenstoffatome enthält.

25. Flüssige Zusammensetzung nach Anspruch 24, in der der lineare niedere Kohlenwasserstoffrest 1 bis 5 Kohlenstoffatome enthält.

26. Flüssige Zusammensetzung nach Anspruch 24, in der die den linearen niederen Kohlenwasserstoffrest enthaltende Säure Pentansäure, Hexansäure oder Heptansäure umfasst.

27. Flüssige Zusammensetzung nach Anspruch 24, in der der verzweigte Kohlenwasserstoffrest 5 bis 20 Kohlenstoffatome enthält.

28. Flüssige Zusammensetzung nach Anspruch 27, in der der verzweigte Kohlenwasserstoffrest 5 bis 14 Kohlenstoffatome enthält.

29. Flüssige Zusammensetzung nach Anspruch 27, in der die den verzweigten Kohlenwasserstoffrest enthaltende Säure 2-Methylhexansäure, 3,5,5-Trimethylhexansäure, 2-Ethylhexansäure, Neoheptansäure oder Neodecansäure umfasst.

30. Flüssige Zusammensetzung nach Anspruch 24, in der der lineare Kohlenwasserstoffrest 8 bis 18 Kohlenstoffatome enthält.

31. Flüssige Zusammensetzung nach Anspruch 30, in der der lineare Kohlenwasserstoffrest 8 bis 14 Kohlenstoffatome enthält.

32. Flüssige Zusammensetzung nach Anspruch 30, in der die den linearen Kohlenwasserstoffrest enthaltende Säure Decansäure, Dodecansäure, Stearinsäure oder Laurinsäure umfasst.

33. Flüssige Zusammensetzung nach entweder Anspruch 1 oder Anspruch 2, in der die Carbonsäure eine Dicarbonsäure ist.

34. Flüssige Zusammensetzung nach entweder Anspruch 1 oder Anspruch 2, in der die Carbonsäure ein Gemisch einer Hauptmenge einer Monocarbonsäure und einer kleineren Menge einer Dicarbonsäure umfasst.

35. Flüssige Zusammensetzung nach entweder Anspruch 33 oder Anspruch 34, in der die Dicarbonsäure Adipinsäure ist.

36. Flüssige Zusammensetzung nach entweder Anspruch 1 oder Anspruch 2, in der R¹ mehr als eine(n) Carboxylgruppe oder Carbonsäureesterrest enthält.

## Revendications

1. Composition liquide comprenant :
(A) une quantité majeure (une proportion supérieure à 50% en poids) d'au moins une hydrocarbure contenant du fluor comportant 1 ou 2 atomes de carbone, où le fluor constitue le seul atome d'halogène présent dans l'hydrocarbure contenant du fluor ; et
(B) une quantité mineure (une proportion inférieure à 50% en poids) d'un lubrifiant soluble, lequel est au moins un ester carboxylique d'un composé polyhydroxyle contenant au moins 2 groupes hydroxyle et **caractérisé par** la formule générale
R [OC (O) R¹]ₙ (1)
dans laquelle R est un groupe hydrocarbyle contenant jusqu'à 20 atomes de carbone, chaque R¹ représente indépendamment un atome d'hydrogène, un groupe hydrocarbyle inférieur à chaîne droite contenant jusqu'à 7 atomes de carbone, un groupe hydrocarbyle à chaîne ramifiée contenant jusqu'à 20 atomes de carbone, ou un groupe hydrocarbyle à chaîne droite contenant de 8 à 22 atomes de carbone, à condition qu'au moins un R¹ soit un atome d'hydrogène, un groupe hydrocarbyle à chaîne droite inférieur contenant jusqu'à 7 atomes de carbone ou un groupe hydrocarbyle à chaîne ramifiée contenant jusqu'à 20 atomes de carbone, ou un groupe hydrocarbyle contenant un acide carboxylique - ou un ester d'acide carboxylique - et n représente au moins 2, où le groupe hydrocarbyle peut comporter des hétéroatomes ;
à condition que
(a) le composé (A) ne soit pas le 1,1,1,2-tétrafluoroéthane lorsque le composé (B) représente (i) 25% en poids de la composition de Mobil P51 (tétraester de pentaérythritol d'un mélange d'acides alcanoïques contenant de 7 à 9 atomes de carbone) ayant une viscosité à 38°C de 25x10⁻⁶ m²/s, ou (ii) 16% en poids de la composition de Mobil P41 (triheptanoate de triméthylolpropane) ayant une viscosité à 38°C de 15x10⁻⁶ m²/s ;
(b) le composé (A) ne soit pas le 1,1,1,2-tétrafluoroéthane lorsque le composé (B) représente : (i) 13% en poids de la composition d'un mélange ayant une viscosité à 38°C de 87×10⁻⁶ m²/s, comprenant 70% de P-2000 (propylène glycol et oxyde de propylène avec un poids moléculaire de 2000) et 30% de Mobil P51, ou (ii) 20% en poids de la composition d'un mélange ayant une viscosité à 38°C de 4×10⁻⁵ m²/s, comprenant 30% de P-2000 et 70% de Mobil P41, et
(c) le composé (A) ne soit pas le 1,1,1,2-tétrafluoroéthane lorsque le composé (B) représente : (i) 9, 12, 17 ou 22% en poids de la composition d'un mélange ayant une viscosité à 38°C de 89×10⁻⁶ m²/s, comprenant 90% de CP700 (glycérine et oxyde de propylène avec un poids moléculaire de 700) et 10% de Mobil P51 ; (ii) 8, 19 ou 29% en poids de la composition d'un mélange ayant une viscosité à 38°C de 203×10⁻⁶ m²-/s, comprenant 75% d'EDA511 (éthylènediamine et oxyde de propylène avec un poids moléculaire de 511) et 25% de Mobil P41 ; (iii) 9, 11 ou 20% en poids de la composition d'un mélange ayant une viscosité à 38°C de 245×10⁻⁶ m²/s, comprenant 75% d'EDA511 et 25% de Mobil P51 ; ou (iv) 18% en poids de la composition d'un mélange ayant une viscosité à 38°C de 78×10⁻⁶ m²/s, comprenant 70% de CP1406 (glycérine et oxyde de propylène avec un poids moléculaire de 1406) et 30% de Mobil P51.

2. Composition liquide selon la revendication 1, dans laquelle l'hydrocarbure contenant du fluor (A) est le 1,1,1,2-tétrafluoroéthane.

3. Composition liquide selon la revendication 1 ou 2 comprenant de 70 à 99% en poids de l'hydrocarbure contenant du fluor (A) et de 1 à 30% en poids du lubrifiant organique soluble (B).

4. Composition liquide selon la revendication 1 ou 2, dans laquelle R¹ dans la Formule I est un groupe hydrocarbyle à chaîne ramifiée contenant de 4 à 20 atomes de carbone.

5. Composition liquide selon la revendication 1 ou 2, dans laquelle n dans la Formule I est un nombre entier de 2 à 10.

6. Composition liquide selon la revendication 5, dans laquelle (B) est dérivé d'un composé polyhydroxyle contenant des groupes oxyalkylène.

7. Composition liquide selon la revendication 5, dans laquelle (B) est dérivé d'un composé polyhydroxyle, lequel est une alcanolamine contenant au moins deux groupes hydroxyle.

8. Composition liquide selon la revendication 1 ou la revendication 2, laquelle est dépourvue de composés à base d'oxyde d'alkylène.

9. Composition liquide selon la revendication 5, dans laquelle n est un nombre entier de 3 à 10.

10. Composition liquide selon la revendication 1 ou 2, dans laquelle R est un groupe hydrocarbyle contenant au moins un atome d'azote ou un atome d'oxygène.

11. Composition liquide selon la revendication 1 ou 2, dans laquelle (B) est un ester carboxylique de pentaérythritol, de dipentaérythritol, de tripentaérythritol.

12. Composition liquide selon la revendication 7, dans laquelle (B) est un ester carboxylique d'une alcanolamine contenant au moins 3 groupes hydroxyle.

13. Composition liquide comprenant :
(A) de 70 à 99% en poids du 1,1,1,2-tétrafluoroéthane ; et
(B) de 1 à 30% en poids d'un lubrifiant organique soluble, lequel est au moins un ester carboxylique d'un composé polyhydroxyle contenant de 3 à 10 groupes hydroxyle et **caractérisé par** la formule générale
R[OC (O) R¹]ₙ (I)
dans laquelle R est un groupe hydrocarbyle contenant jusqu'à 20 atomes de carbone, chaque R¹ représente indépendamment un atome d'hydrogène, un groupe alkyle à chaîne droite contenant de 1 à 5 atomes de carbone, un groupe alkyle à chaîne ramifiée contenant de 5 à 20 atomes de carbone, ou un groupe alkyle à chaîne droite contenant de 8 à 12 atomes de carbones, à condition qu'au moins un R¹ soit un atome d'hydrogène, un groupe alkyle à chaîne droite contenant 1 à 5 atomes de carbone ou un groupe alkyle à chaîne ramifiée contenant de 5 à 20 atomes de carbone, et n est un nombre entier de 3 à 10, où le groupe hydrocarbyle peut contenir des hétéroatomes ;
à condition que
(a) le composé (A) ne soit pas le 1,1,1,2-tétrafluoroéthane lorsque (B) représente (i) 25% en poids de la composition de Mobil P51 (tétraester de pentaérythritol d'un mélange d'acides alcanoiques ayant 7 à 9 atomes de carbone) ayant une viscosité à 38°C de 25x10⁻⁶ m²/s, ou (ii) 16% en poids de la composition de Mobil P41 (triheptanoate de triméthylolpropane) ayant une viscosité à 38°C de 15×10⁻⁶ m²/s ;
(b) le composé (A) ne soit pas le 1,1,1,2-tétrafluoroéthane lorsque le composé (B) représente : (i) 13% en poids de la composition d'un mélange ayant une viscosité à 38°C de 87×10⁻⁶ m²/s, comprenant 70% de P-2000 (propylène glycol et oxyde de propylène avec un poids moléculaire de 2000) et 30% de Mobil P51, ou (ii) 20% en poids de la composition d'un mélange ayant une viscosité à 38°C de 4×10⁻⁵ m²/s, comprenant 30% de P-2000 et 70% de Mobil P41, et
(c) le composé (A) ne soit pas le 1,1,1,2-tétrafluoroéthane lorsque le composé (B) représente : (i) 9, 12, 17 ou 22% en poids de la composition d'un mélange ayant une viscosité à 38°C de 89×10⁻⁶ m²/s, comprenant 90% de CP700 (glycérine et oxyde de propylène avec un poids moléculaire de 700) et 10% de Mobil P51 ; (ii) 8, 19 ou 29% en poids de la composition d'un mélange ayant une viscosité à 38°C de 203×10⁻⁶ m²/s, comprenant 75% d'EDA511 (éthylènediamine et oxyde de propylène avec un poids moléculaire de 511) et 25% de Mobil P41 ; (iii) 9, 11 ou 20% en poids de la composition d'un mélange ayant une viscosité à 38°C de 245×10⁻⁶ m² /s, comprenant 75% d'EDA511 et 25% de Mobil P51 ; ou (iv) 18% en poids de la composition d'un mélange ayant une viscosité à 38°C de 78×10⁻⁶ m²/s, comprenant 70% de CP1406 (glycérine et oxyde de propylène avec un poids moléculaire de 1406) et 30% de Mobil P51.

14. Composition liquide selon la revendication 13, dans laquelle chaque R¹ représente indépendamment un group méthyle ou un groupe éthyle.

15. Composition liquide selon la revendication 13, dans laquelle chaque R¹ représente un groupe alkyle à chaîne ramifiée contenant de 5 à 14 atomes de carbone.

16. Composition liquide selon la revendication 13, dans laquelle au moins un des groupes R¹ représente un atome d'hydrogène ou un groupe méthyle ou éthyle et les groupes R¹ restants sont des groupes alkyle à chaîne ramifiée contenant de 5 à 20 atomes de carbone.

17. Composition liquide selon la revendication 13, dans laquelle les groupes alkyle à chaîne ramifiée ont la structure
-C(R²) (R³) (R⁴)
dans laquelle R², R³ et R⁴ représentent chacun indépendamment des groupes alkyle et au moins l'un des groupes alkyle contient 2 ou plus atomes de carbone.

18. Composition liquide selon la revendication 17, dans laquelle R² et R³ sont des groupes méthyle.

19. Composition liquide selon la revendication 13, dans laquelle le composé polyhydroxyle est une alcanolamine contenant de 3 à 6 groupes hydroxyle.

20. Composition liquide selon la revendication 13, dans laquelle le composé polyhydroxyle est le mono- ou dipentaérythritol.

21. Composition liquide selon la revendication 13, laquelle est dépourvue de composés d'oxyde d'alkylène.

22. Composition liquide selon la revendication 1 ou 2, dans laquelle ledit acide carboxylique est un acide monocarboxylique.

23. Composition liquide selon la revendication 5, dans laquelle ledit composé polyhydroxyle comprend le néopentylglycol, le pentaérythritol, le dipentaérythritol, le tripentaérythritol, le triméthylolpropane, et des mélanges de ceux-ci.

24. Composition liquide selon la revendication 5, dans laquelle ledit acide carboxylique comprend :
a) un anhydride ou acide contenant un groupe hydrocarbyle inférieur à chaîne droite, où ledit groupe hydrocarbyle inférieur à chaîne droite contient de 1 à 7 atomes de carbone ;
b) un anhydride ou acide contenant un groupe hydrocarbyle à chaîne ramifiée, où ledit groupe hydrocarbyle à chaîne ramifiée contient de 4 à 20 atomes de carbone ; et
c) un mélange d'un ou deux composés parmi :
i) un anhydride ou acide contenant un groupe hydrocarbyle inférieur à chaîne droite, où ledit groupe hydrocarbyle inférieur à chaîne droite contient de 1 à 7 atomes de carbone, et
ii) un anhydride ou acide contenant un groupe hydrocarbyle à chaîne ramifiée, où ledit groupe hydrocarbyle à chaîne ramifiée contient de 4 à 20 atomes de carbone
avec un anhydride ou acide contenant un groupe hydrocarbyle à chaîne droite, où ledit groupe hydrocarbyle à chaîne droite contient de 8 à 22 atomes de carbone.

25. Composition liquide selon la revendication 24, dans laquelle ledit groupe hydrocarbyle inférieur à chaîne droite contient de 1 à 5 atomes de carbone.

26. Composition liquide selon la revendication 24, dans laquelle ledit acide contenant un groupe hydrocarbyle inférieur à chaîne droite comprend un acide pentanoïque, un acide hexanoïque ou un acide heptanoïque.

27. Composition liquide selon la revendication 24, dans laquelle ledit groupe hydrocarbyle à chaîne ramifiée contient de 5 à 20 atomes de carbone.

28. Composition liquide selon la revendication 27, dans laquelle ledit groupe hydrocarbyle à chaîne ramifiée contient de 5 à 14 atomes de carbone.

29. Composition liquide selon la revendication 27, dans laquelle ledit acide contenant un groupe hydrocarbyle à chaîne ramifiée comprend l'acide 2-méthylhexanoïque, l'acide 3,5,5-triméthylhexanoïque, l'acide 2-éthylhexanoïque, l'acide néoheptanoïque, ou l'acide néodécanoïque.

30. Composition liquide selon la revendication 24, dans laquelle ledit groupe hydrocarbyle à chaîne droite contient de 8 à 18 atomes de carbone.

31. Composition liquide selon la revendication 30, dans laquelle ledit groupe hydrocarbyle à chaîne droite contient de 8 à 14 atomes de carbone.

32. Composition liquide selon la revendication 30, dans laquelle ledit acide contenant un groupe hydrocarbyle à chaîne droite comprend l'acide décanoïque, l'acide dodecanoïque, l'acide stéarique, ou l'acide laurique.

33. Composition liquide selon la revendication 1 ou la revendication 2, dans laquelle ledit acide carboxylique est un acide dicarboxylique.

34. Composition liquide selon la revendication 1 ou la revendication 2, dans laquelle ledit acide carboxylique comprend un mélange d'une quantité majeure d'acide monocarboxylique et une quantité mineure d'acide dicarboxylique.

35. Composition liquide selon la revendication 33 ou la revendication 34, dans laquelle ledit acide dicarboxylique est un acide adipique.

36. Composition liquide selon le revendication 1 ou la revendication 2, dans laquelle R¹ contient plus d'un groupe carboxyle ou d'un groupe ester carboxylique.
